# EUROPEAN PATENT APPLICATION

(11) **EP 4 216 490 A1**
(43) Date of publication of application: **26.07.2023**
(21) Application number: 23152801.9
(22) Date of filing: 23.01.2023
(51) Int. Cl.: H04L 9/32, H04L 9/00, G06F 16/00

(54) **COMPUTERIZED PLATFORM FOR INTERACTING WITH A DATA ARCHIVE**

(30) Priority: 25.01.2022 IT 202200001244
(71) Applicant: The Nest Company S.r.l., 20122 Milano (IT)
(72) Inventor: PARRINI, Riccardo Maria, Padenghe sul Garda (IT); Manikantan, Srinivasan, Verano Brianza (MB) (IT); RIVA, Ivan, Verano Brianza (MB) (IT); CHIARAMONDIA, Stefano Giovanni, Milano (IT)
(74) Representative: De Bortoli, Eros

(57) **Abstract**

A computerized platform comprising a first computerized structure and a second computerized structure capable of communicating with each other.

The first computerized structure is adapted to communicate with one or more computerized devices external to said computerized platform while the second computerized structure is adapted to communicate with said data archive.

## Description

### Field of the invention

The present invention concerns the field of IT technologies for the conservation and notarization of information. In particular, the present invention refers to a computerized platform that allows a user to interact with a data archive of the type capable of storing information in a manner unchangeable and verifiable by a user.

### Prior art

Data archives capable of storing information in a manner unchangeable and verifiable by a user are widely known.

The ledger type data archives widely used in blockchain computerized systems to manage the exchange of cryptocurrency are an example of said data archives.

The data archives of this type, however, are widely used also in other application environments, for example in computerized systems for tracking the life cycle of a material or a product, in computerized systems for managing supply chains of materials or products or in computerized systems for tracking waste treatment.

Currently, the computerized systems that use this type of data archive are heavily conditioned by the specific technology used to create the data archive. These computerized systems are therefore often difficult for a user to access and are characterized by a reduced flexibility of use.

Furthermore, the computerized systems currently available are normally designed for application environments in which the so-called "value chain" has a substantially linear development, for example of the "producer-distributor-user" type or the "waste-recycle-product" type.

In general, said computerized systems are not suitable for application environments in which the value chain develops in a distributed manner, involving numerous players for whom it is not easy to operate in a standardized manner and in compliance with predefined regulations and industrial practices.

### Summary of the invention

The main task of the present invention is to provide a computerized platform for interacting with a data archive of the type capable of storing information in a manner unchangeable and verifiable by a user and which overcomes the drawbacks of the known art.

In the context of this task, an object of the present invention is to provide a computerized platform that has a high flexibility of use and that can be operatively used to access data archives implemented according to different technologies.

A further object of the present invention is to provide a computerized platform that allows a computerized system to be used in application environments for which the value chain develops in a linear manner or in a distributed manner.

A further object of the present invention is to provide a computerized platform which is easy to use and relatively simple to implement in practice, at market-competitive costs.

This task and these objects, in addition to other objects that will be evident from the following description and the attached drawings, are achieved, according to the invention, by a computerized platform according to claim 1 and the relative dependent claims proposed below.

In a general definition, the computerized platform, according to the invention, is adapted to allow a user to interact (namely to write or acquire data) with a data archive capable of storing information in a manner unchangeable and verifiable by a user.

Preferably, the above-mentioned data archive is a ledger type data archive.

The computerized platform, according to the invention, comprises a first computerized structure and a second computerized structure capable of communicating with each other. The first computerized structure is adapted to communicate with one or more computerized devices external to said computerized platform while the second computerized structure is adapted to communicate with said data archive.

The above-mentioned first computerized structure is configured to:
- acquire, from an external computerized device, a first data write request in said data archive by a user. Said first data write request includes first data indicative of the identity of the user and second data to be written in said data archive;
- validate the identity of said user by checking whether said user is authorized to access said data archive;
- validate said second data by checking whether said second data have a predefined format according to the application environment of said computerized platform;
- send a first call message to said second computerized structure. Said first call message includes said second data.

The above-mentioned second computerized structure is configured to:
- acquire, from said first computerized structure, the first call message sent from said first computerized structure;
- send to said data archive a second data write request having a predefined format required by said data archive. Said second data write request includes said second data;
- acquire, from said data archive, a first encrypted code indicative of said second data stored in said data archive;
- send said first encrypted code to said first computerized structure.

Said first computerized structure is configured to forward said first encrypted code to the external computerized device that sent said first data write request.

Preferably, the above-mentioned second computerized structure is configured to:
- acquire a preliminary code from said data archive. Said preliminary code is indicative of the second data write request sent by said second computerized structure;
- send said preliminary code to said data archive;
- acquire said first encrypted code from said data archive.

Preferably, the above-mentioned second computerized structure is configured to validate the identity of said first computerized structure, before sending said second data write request to said data archive.

Preferably, the first data write request, acquired from said first computerized structure, includes one or more further encrypted codes indicative of data already stored in said data archive.

Preferably, the first call message, sent from said first computerized structure to said second computerized structure, includes the above-mentioned one or more further encrypted codes together with the second data of said first data write request.

Preferably, the second data write request, sent from said second computerized structure to said data archive, includes said one or more further encrypted codes together with said second data.

According to a further aspect of the invention, the above-mentioned first computerized structure is configured to:
- acquire, from an external computerized device, a first data acquisition request from said data archive by a user. The above-mentioned first data acquisition request includes first data indicative of the identity of said user and at least a second encrypted code indicative of third data to be acquired from said data archive;
- validate the identity of said user by checking whether said first data are included in a predefined list in which data are stored indicative of the identity of users authorized to access said data archive;
- send a second call message to said second computerized structure. The above-mentioned second call message includes said at least one second encrypted code.

According to said further aspect of the invention, the above-mentioned second computerized structure is configured to:
- acquire the above-mentioned second call message from said first computerized structure;
- send a second data acquisition request to said data archive. The above-mentioned second data acquisition request has a predefined format required by said data archive and includes said at least one second encrypted code;
- acquire, from said data archive, the third data identified by said at least one second encrypted code.

Preferably, the above-mentioned second computerized structure is configured to acquire, from said data archive, further data stored in said data archive and identified by one or more encrypted codes connected to said at least one second encrypted code. The second computerized structure is configured to send, to said first computerized structure, at least a portion of the data acquired from said data archive. The first computerized structure is configured to forward the data acquired from said second computerized structure to the external computerized device that sent said first data acquisition request.

Preferably, the above-mentioned second computerized structure is configured to:
- select a portion of the data acquired from said data archive;
- send the selected portion of data to said first computerized structure.

Preferably, the above-mentioned second computerized structure is configured to validate the identity of said first computerized structure, before sending said second data acquisition request to said data archive.

In a further aspect, the present invention refers to a computerized system according to claim 11 proposed below.

Preferably, said computerized system is a computerized system designed to manage the life cycle of a material or product.

Further characteristics and advantages of the present invention will be evident from the description provided below and the attached figures, provided for purely illustrative nonlimiting purposes, in which:
- figure 1 illustrates schematically the computerized platform, according to the invention;
- figures 2-3 illustrate schematically some operating phases of the computerized platform, according to the invention.

### Description of the invention

With reference to the cited figures, the present invention refers to a computerized platform 1 for interacting with a data archive 100 of the type capable of storing information in a manner unchangeable and verifiable by a user.

Preferably, the data archive 100 is capable of storing data in encrypted form.

Preferably, the data archive 100 is a ledger type archive.

Typically, the data archive 100 is not included in the computerized platform 1. In some embodiments, however, it can be part of the latter.

In general, the data archive 100 can be produced according to solutions of known type.

In a possible embodiment, the data archive 100 can have a decentralized architecture and comprise a series of separate registers adapted to store, in parallel, the same information. In this case, for example, it can be part of a blockchain computerized system.

Alternatively, the data archive 100 can have a centralized architecture and consist, for example, of an *Amazon QLDB***^{™}** database, a *Microsoft Azure Confidential Ledger***^{™}** database, an *Alibaba Ledger DB***^{™}** database and the like.

Preferably, the data archive 100 is adapted to store data relative to the life cycle of a material or product. In principle, however, it can also be used to store other types of data.

As indicated above, the computerized platform 1 is adapted to allow a user to interact with the data archive 100, namely write data in the above-mentioned archive or acquire data from the above-mentioned archive.

The computerized platform 1 comprises a first computerized structure 2 and a second computerized structure 3 capable of communicating with each other.

The computerized structures 2, 3 can be integrated with each other and constitute a single processing system or form separate processing systems, if necessary in a remote position from each other.

Each computerized structure 2, 3 advantageously comprises a series of computerized modules interacting with one another to implement the functions described below.

Each computerized structure 2, 3 comprises a plurality of computerized modules.

For the sake of clarity, it is specified that, in the context of the present invention, the term "computerized module" refers to a set of hardware and software resources designed to perform some functions of interest.

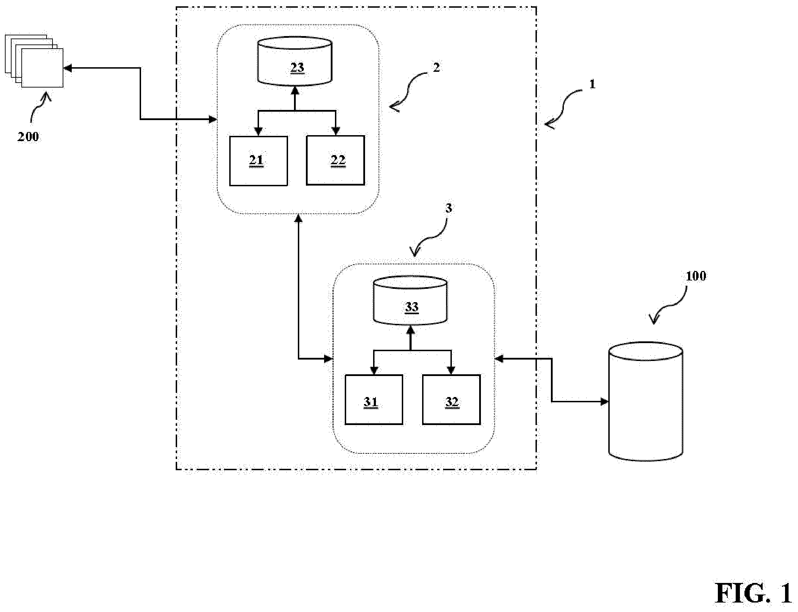

In general, each computerized structure 2, 3 comprises a series of computerized modules (not illustrated) designed to implement functions of known type. Other computerized modules (computerized modules 21-23, 31-33 of figure 1) are advantageously designed for specific implementation of the functions of interest for the invention. Each computerized structure 2, 3 can physically consist of several computerized devices interacting with one another, for example to implement a cloud type processing architecture.

According to the invention, the first computerized structure 2 is adapted to communicate with one or more computerized devices 200, external to the computerized platform 1.

Each computerized device 200 can include a computer or other digital device that can be used by a physical person or a digital processing unit capable of acting autonomously.

For the sake of clarity, it is therefore specified that, in the context of the present invention, the term "*user*", referring to the computerized platform 1, can advantageously indicate any physical person or any digital processing unit intending to use the computerized platform 1 to interact with the data archive 100.

For example, if the data archive 100 is designed to store data relative to the life cycle of a material or product, a "*user*" of the computerized platform 1 can consist of a data processing system capable of calculating certain technical properties of the material or product of interest and arranged to automatically transcribe the processed data in the data archive 100, a digital processing unit of an ERP computerized system, a business management computerized system, and so on.

In other application environments, a "*user*" of the computerized platform 1 can consist of a digital processing unit of a robot, an industrial machine, an IoT device, and so on. Alternatively, a "*user*" of the computerized platform 1 can be a physical person in possession of data to be transcribed in the data archive 100 or wishing to acquire data from the data archive 100.

Each computerized device 200 can advantageously communicate with the computerized structure 2 via the Internet or through any dedicated digital communication network, for example a LAN. For this purpose, the computerized structure 2 can be accessed, by each computerized device 2, through a dedicated web portal, an API interface, or by means of a QR code, RFID or barcode connection, and the like.

As mentioned above, the computerized structures 2, 3 of the computerized platform 1 are adapted to communicate with each other. Said computerized structures can communicate according to known methods, for example via the Internet or any dedicated digital communication network, for example a LAN.

According to the invention, the computerized structure 3 is adapted to communicate with the data archive 100. The communication with the data archive 100 can take place according to known methods, for example via the Internet or any dedicated digital communication network, for example a LAN.

A very important aspect of the present invention consists in the fact that the computerized platform 1 is configured to allow a user to write data in the data archive 100 so that said data are stored in a permanent non-modifiable way, preferably in encrypted form.

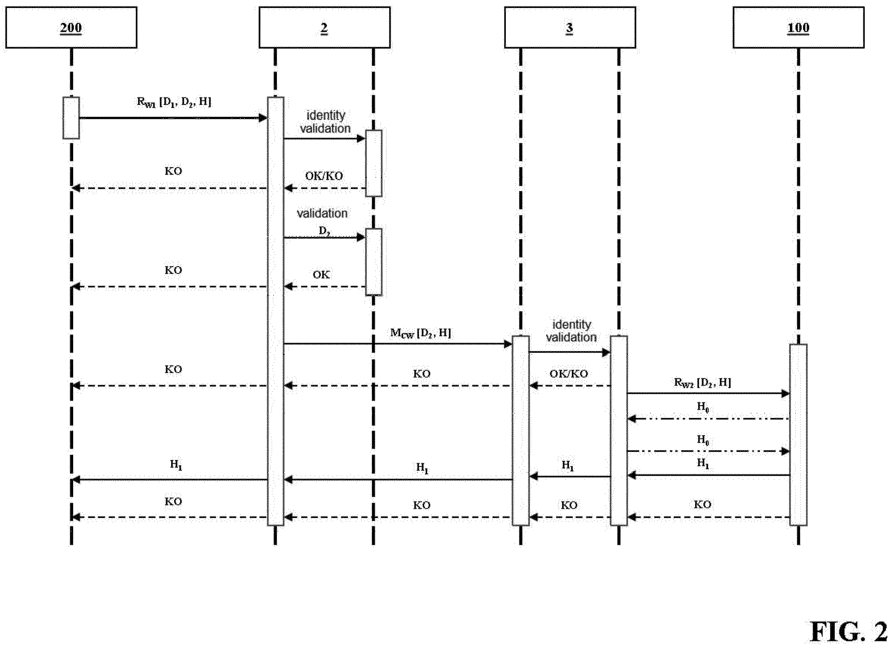

With reference to figure 2, the first computerized structure 2 is configured to acquire, from an external computerized device 200, a first data write request R_{W1} of the data archive 100 by a user.

The first data write request R_{W1} (which can be transmitted according to the communication methods illustrated above) includes at least first data D₁ indicative of the identity of the user and second data D₂ to be written in the data archive 100.

The first data D₁ advantageously comprise the access credentials necessary for the user to interact with the computerized platform 1 and, more generally, with the data archive 100. The second data D₂ advantageously comprise the information (data, metadata, connections, etc.) which the user wishes to transcribe in the data archive 100.

Where necessary, the first data write request R_{W1} can include one or more encrypted codes H indicative of data already stored in the data archive 100 and connected or connectable to the second data D₂ to be transcribed in the data archive. The encrypted codes H can consist, for example, of hash codes relative to data already stored in the data archive 100.

The first data write request R_{W1} is arranged according to a format made available by the computerized structure 2. The first and second data D₁, D₂ and any encrypted codes H can be included in a file (for example in Json language) attached to the first data write request R_{W1}. In response to receipt of the first data write request R_{W1}, the computerized structure 2 carries out a validation of the user's identity, checking that the latter is authorized to interact with the data archive 100.

The user identification validation process preferably comprises verification that the first data D₁ (in practice user access credentials) are included in a predefined list, stored on board the computerized structure 2. The identification data of the users authorized to interact with the data archive 100 are advantageously stored in said predefined list.

If the first data D₁ of the data write request R_{W1} are not validated, the computerized structure 2 sends an error message KO to the computerized device 200 that sent said data write request. Otherwise, the computerized structure 2 proceeds with validation of the second data D₂ included in the data write request R_{W1}.

In this case, the validation process consists in verifying that the second data D₂ have a predefined format that depends on the type of application to which the computerized platform is dedicated.

In practice, the computerized structure 2 checks that the second data D₂ of the data write request R_{W1} are arranged with a correct configuration and syntax, suitable for the application environment for which the computerized platform is intended.

Preferably, the computerized structure 2 compares the format of the second data D₂ with a predefined model, advantageously stored in the computerized module 23.

Said predefined model is advantageously arranged based on the application environment for which the computerized platform is intended and not on the technology with which the data archive 100 is created, from which it is substantially independent. In this way, the computerized structure 2 allows a user to use its application tools without having to adapt to the specific technology with which the data archive 100 has been created.

Based on the above, it is evident that the main task of the first computerized structure 2 is to make available data acquisition services for the data D₂ to be written in the data archive 100, which can be immediately used by the application tools available to the user, without said application tools being specifically configured to interact with the data archive 100.

Also in this case, if the validation process fails for any reason, the computerized structure 2 sends an error message KO to the computerized device 200 that sent the data write request.

If the second data D₂ are also validated, the computerized structure 2 sends a first call message M_{CW} to the computerized structure 3, which advantageously includes the second data D₂ received via the first data write request R_{W1}.

If the first data write request R_{W1} includes one or more encrypted codes H indicative of data already stored in the data archive 100, said encrypted codes are advantageously included in the first call message M_{CW}, together with the second data D₂.

The configuration of the first call message Mew depends substantially on the modes of communication between the computerized structures 2, 3 of the computerized platform 1. For example, if an *https* communication protocol is used, the call message Mew can be an API REST type message containing the original message received from the computerized device 200 and validated by the computerized system 2.

Preferably, the first call message M_{CW} comprises data (not illustrated) indicative of the identity of the first computerized platform 2.

The second computerized structure 3 is adapted to acquire the first call message M_{CW} sent by the first computerized structure 2.

Preferably, in response to the call message M_{CW}, the second computerized structure 3 performs a preliminary validation of the identity of the first computerized structure 2, before communicating with the data archive 100. Said validation process can be carried out in ways similar to what is illustrated above. In practice, the second computerized structure 3 performs a validation of the identity of the first computerized structure 2, checking that the latter is authorized to interact with it. Said verification can be performed according to known methods.

If the above-mentioned validation process fails for any reason, the second computerized structure 3 sends an error message KO to the first computerized structure 2, which forwards said error message to the computerized device 200 that sent the first data write request R_{W1}. Otherwise, in response to receipt of the first call message Mew, the second computerized structure 3 sends a second data write request R_{W2} to the data archive 100.

The second data write request R_{W2} has a format required by the data archive 100 to carry out the storage of data, in particular the data D₂ included in said data write request.

The second data write request includes the second data D₂ received with acquisition of the first call message M_{CW} sent by the first computerized structure 2.

It is important to underline that the second computerized structure 3 does not intervene on the configuration and syntax of the data D₂ but is substantially limited to arranging the second data write request R_{W2} so that the latter has the format required by the data archive 100 and includes the second data D₂. In practice, the second computerized structure 3 is configured to provide a suitable carrier (in this case the second data write request R_{W2}) for writing data in the archive 100 without taking the nature of said data into consideration.

As illustrated above, said solution is particularly advantageous because it allows uncoupling of the application technologies which the user has used to provide the second data D₂ from the technologies necessary for performing the data write operation in the data archive 100.

If the first data write request R_{W1} includes one or more encrypted codes H indicative of data already stored in the data archive 100, said encrypted codes are advantageously included also in the second data write request R_{W2}, together with the second data D₂.

Preferably, the data write request R_{W2} comprises data (not illustrated) indicative of the identity of the second computerized platform 3.

In response to sending of the second data write request R_{W2} by the second computerized structure 3, the data archive 100 stores the second data D₂ in a permanent, non-modifiable, preferably encrypted form.

Following said data write operation, the second computerized structure 3 acquires from the above-mentioned data archive a first encrypted code H₁ indicative of the second data D₂ stored in the data archive.

Preferably, the first encrypted code H₁ is a hash code of the second data D₂ stored in the data archive 100.

If the data archive is an *Amazon QLDB*^{™} database or the like, the acquisition process of the first encrypted code H₁ is organized as follows.

The second computerized structure 3 acquires a preliminary code H₀ from the data archive 100 in response to sending of the second data write request R_{W2}. The preliminary code H₀ is advantageously indicative of the second data write request R_{W2} sent by said second computerized structure 3. Preferably, the preliminary code H₀ is a hash code of the second data write request R_{W2}.

The second computerized structure 3 sends the preliminary code H₀ to the data archive 100 and acquires the first encrypted code H₁ in response to the sending of said preliminary code. The second computerized structure 3 is configured to send the first encrypted code H₁ to the first computerized structure 2. The latter is configured to forward the first encrypted code H₁ to the external computerized device 200 that sent the first data write request R_{W1}.

The data write process, requested by the user, is thus completed.

As indicated above, in response to the data write request R_{W1}, sent to the computerized platform 1, the user receives an encrypted code H₁ indicative of the data stored in the data archive 100.

Obviously, if the data write operation is not successful for any reason, the data archive 100 transmits an error message KO to the second computerized structure 3. The latter forwards the error message to the first computerized structure 2 which, in turn, forwards it to the computerized device 200 that sent the first data write request R_{W1}.

Preferably, in response to the second data write request R_{W2}, the data archive 100 performs a preliminary validation of the identity of the second computerized structure 3, before proceeding with storage of the data and sending of the first encrypted code H₁. Said validation process can be performed with methods similar to those illustrated above.

In response to the data write request R_{W2}, the data archive 100 performs a validation of the identity of the second computerized platform 3, verifying that the latter is authorized to interact with it. Said verification can be carried out according to known methods.

If the above-mentioned validation process fails for any reason, the data archive 100 sends an error message KO to the second computerized structure 3. The latter forwards the error message to the first computerized structure 1, which forwards the error message to the computerized device 200 that sent the first data write request R_{W1}.

A further important aspect of the present invention consists in the fact that the computerized platform 1 is configured also to allow a user to acquire data from the data archive 100, advantageously in encrypted form.

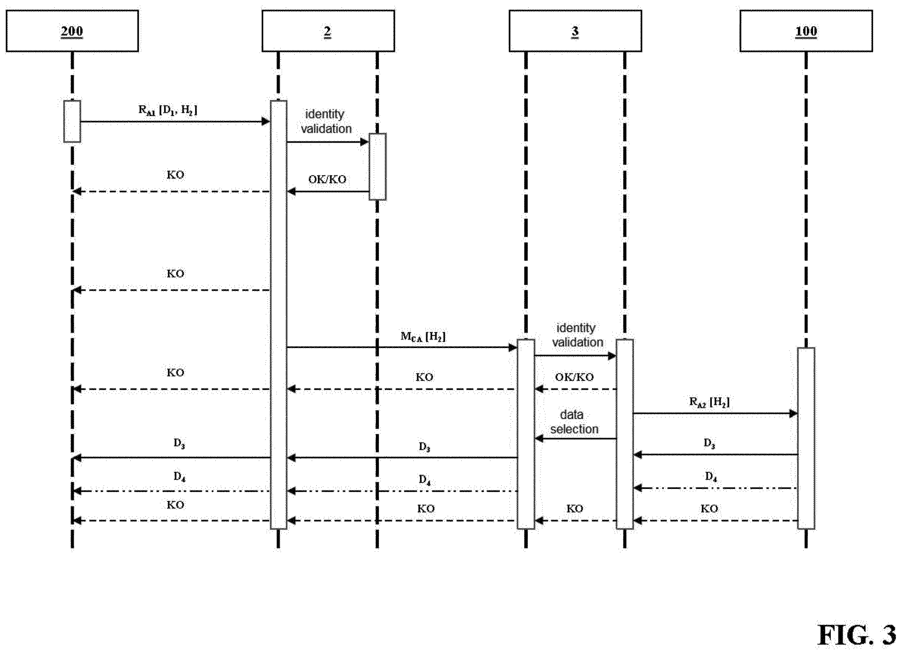

With reference to figure 3, the first computerized structure 2 is configured to acquire, from any external computerized device 200, a first data acquisition request R_{A1} for acquisition of data from the data archive 100, by a generic user.

The first data acquisition request R_{A1} (which can be transmitted according to the communication procedures illustrated above) includes at least the first data D₁ indicative of the identity of the user and one or more second encrypted codes H₂ indicative of third data D₃ to be acquired from the data archive 100.

As indicated above, the first data D₁ advantageously comprise the access credentials required for the user to interact with the computerized platform 1 and, more generally, with the data archive 100.

The one or more second encrypted codes H₂ preferably comprise one or more hash codes of the third data D₃ to be acquired from the data archive 100.

Also the first data acquisition request R_{A1} is arranged according to a format made available by the computerized structure 2. The first data D₁ and the one or more encrypted codes H₂ can be included in a file (for example in Json language) attached to the first data acquisition request R_{A1}.

In response to receipt of the first data acquisition request R_{A1}, the computerized structure 2 performs validation of the identity of the user who wishes to access the data archive 100. Also in this case, the user identity validation process preferably comprises verification that the first data D₁ (in practice user access credentials) are included in a predefined list, stored on board the computerized structure 2.

If the first data D₁ of the data acquisition request R_{A1} are not validated, the computerized structure 2 sends an error message KO to the computerized device 200 that sent the data write request.

Otherwise, the computerized structure 2 sends a second call message M_{CA} to the computerized structure 3.

The second call message M_{CA} advantageously includes the one or more second encrypted codes H₂ received via the first data acquisition request R_{A1}.

The second call message M_{CA} can have a configuration analogous to that of the first call message M_{CW}, described above.

Preferably, the call message M_{CA} comprises data (not illustrated) indicative of the identity of the first computerized platform 2.

The second computerized structure 3 is adapted to acquire the second call message M_{CA} sent by the first computerized structure 2.

Preferably, in response to the second call message M_{CA}, the second computerized structure 3 performs preliminary validation of the identity of the first computerized structure 2, before communicating with the data archive 100. Also this validation process can be carried out as illustrated above.

In response to the call message M_{CA}, the second computerized structure 3 performs a validation of the identity of the first computerized structure 2, verifying that the latter is authorized to interact with it.

If the above-mentioned validation process fails for any reason, the second computerized structure 3 sends an error message KO to the first computerized structure 2, which forwards the error message to the computerized device 200 that sent the first data acquisition request R_{A1}.

Otherwise, in response to receipt of the first call message M_{CW}, the second computerized structure 3 sends a second data acquisition request R_{A2} from the data archive 100.

The second data acquisition request R_{A2} includes the one or more second encrypted codes H₂, received with acquisition of the second call message M_{CA} sent by the first computerized structure 2, and is advantageously generated with predefined format required by the data archive 100 with regard to the acquisition of data, in particular for acquiring the data indicated by the encrypted codes H₂ included in said data write request.

Similar to what is illustrated above, the second computerized structure 3 is substantially limited to arranging the second data acquisition request R_{A2} so that the latter includes the one or more second encrypted codes H₂, without taking into account the nature of the above-mentioned encrypted codes.

This allows the application technologies which the user has used to provide the second encrypted codes H₂ to be uncoupled from the operation of data acquisition from the data archive 100, which substantially depends on the technologies with which the latter has been created.

Preferably, the second data acquisition request R_{A2} comprises data (not illustrated) indicative of the identity of the second computerized platform 3.

Following sending of the second data acquisition request R_{A2} to the data archive 100, the second computerized structure 3 acquires from the above-mentioned data archive the third data D₃ stored in the data archive and indicated by the one or more second encrypted codes H₂ transmitted to the data archive 100.

Preferably, in response to the data acquisition request R_{A2}, the data archive 100 performs a preliminary validation of the identity of the second computerized structure 3, before proceeding with providing the requested data. Said validation process can be carried out with methods similar to those illustrated above.

In response to the data acquisition request R_{A2}, the data archive 100 performs validation of the identity of the second computerized structure 3, checking that the latter is authorized to interact with it.

If the above-mentioned validation process fails for any reason, the data archive 100 sends an error message KO to the second computerized structure 3. The latter forwards the error message to the first computerized structure 1, which forwards the error message to the computerized device 200 that sent the first data acquisition request R_{A1}.

Preferably, the second computerized structure 3 is configured to acquire from the data archive 100, in addition to the third data D₃ identified by the one or more encrypted codes H₂, also further data D₄, already stored in the data archive 100 and identified by one or more encrypted codes connected to the one or more second encrypted codes H₂.

Advantageously, the further data D₄ are provided automatically by the data 100 in response to the second data acquisition request R_{A2}, sent by the second computerized structure 3. Preferably, the second computerized structure 3 is configured to send at least a portion of the data D₃, D₄ acquired from the data archive 100 to the first computerized structure 2. According to some embodiments of the invention, the second computerized structure 3 is configured to integrally transmit to the first computerized structure 2 the data D₃, D₄ acquired from the data archive 100.

According to other embodiments of the invention, the second computerized structure 3 is configured to select a portion of the data D₃, D₄ acquired from the data archive 100 and send the portion of data thus selected to the first computerized structure 2.

Preferably, the first computerized structure 2 is configured to forward the data D₃, D₄, acquired from the second computerized structure 3, to the external computerized device 200 that sent the first data acquisition request R_{A1}.

The data acquisition process, requested by the user, is thus complete. In response to the data acquisition request R_{A1}, sent to the computerized platform 1, the user receives at least a part of the data D₃ identified by the one or more second encrypted codes H₂ sent and, possibly, at least a part of the data of further data D₄ stored in the data archive 100 and connected to the data D₃ requested by the user.

Obviously, if the data acquisition operation is not successful for any reason, the data archive 100 transmits an error message KO to the second computerized structure 3. The latter transmits the error message to the first computerized structure 2 which, in turn, forwards it to the computerized device 200 that sent the first data acquisition request R_{A1}.

As illustrated above, the computerized structures 2, 3 comprise a series of computerized modules designed to carry out the functions described above.

Preferably, the first computerized structure 2 comprises a first computerized module 21 configured to manage the communication with any external computerized devices 200 and with the second computerized structure 3. Said computerized module can be produced using software development tools of known type, for example the software platform TRAEFIK^{™}, NGINX^{™}, HAProxy^{™}, Apache HTTPd^{™}, Varnish^{™}, Squid^{™}, and the like.

Preferably, the first computerized structure 2 comprises a second computerized module 22 configured to manage the validation processes of the information coming from the user with the data write requests R_{W1} and data acquisition requests R_{A1}. Also said computerized module can be produced using software development tools of known type, for example the software platform SPRINGBOOT^{™}, .NET^{™}, Struts^{™}, Grails^{™}, Hibernate^{™}, and the like. Preferably, the first computerized structure 2 comprises a first database 23 configured to store information useful for execution of the validation processes performed by the first computerized structure 2 and, more generally, information relative to the operations carried out by said computerized structure. For example, the database 23 can be configured to conserve the above-mentioned list of users authorized to interact with the data archive 100 and a time list (namely a log) of all the transactions performed by the computerized structure 2.

Also the database 23 can be of known type, for example a database of known type, for example MySQL^{™}, ORACLE^{™}, SQLServer^{™}, MongoDB^{™}, MariaDB^{™}, PostgreSQL^{™}, and the like.

Preferably, the second computerized structure 3 comprises a third computerized module 31 configured to manage the communication with the first computerized structure 2. Said computerized module can be produced using software development tools of known type, for example TRAEFIK^{™}, NGINX^{™}, HAProxy^{™}, Apache HTTPd, ^{™} Varnish^{™}, Squid^{™}, and the like.

Preferably, the second computerized structure 3 comprises a fourth computerized module 32 configured to interact with the data archive 100, in particular to generate the data write requests R_{W2} and data acquisition requests R_{A2} and send them to the latter. The fourth computerized module 32 can be produced using software development tools of known type, for example SPRINGBOOT^{™}, .NET^{™}, Struts^{™}, Grails^{™}, Hibernate^{™}, and the like. Preferably, the second computerized structure 2 comprises a second database 33 configured to store information relative to the operations performed by the second computerized structure 3. For example, the database 33 can be configured to conserve a time list (namely a log) of all the transactions performed by the computerized structure 3. Also the database 33 can be of known type, for example MySQL^{™}, ORACLE^{™}, SQLServer^{™}, MongoDB^{™}, MariaDB^{™}, PostgreSQL^{™}, and the like.

### Examples of practical applications of the invention

As illustrated above, the computerized platform 1 is designed to be integrated in computerized systems comprising data archives of the type capable of storing information in a manner unchangeable and verifiable by a user, for example ledger type data archives.

### Example #1

According to a practical application of the invention, the computerized platform 1 is part of a computerized system designed to manage the life cycle of a material or product.

In this application of the computerized platform 1, the data exchanged with the data archive 100, for example the above-mentioned second, third and fourth data D₂, D₃, D₄ advantageously include information (data, metadata, connections, etc.) relative to a specific state of the material or product of interest.

For example, if the material of interest is a recycled plastic raw material, the data exchange with the data archive 100, in relation to the material of interest, can comprise technical information relative to the trade name, quantity, form, colour, density, fluidity index, quality, packaging, place, production date, possible transformation technologies, analysis certificates, compliance with technical requirements established by specific territorial legislation, environmental impact in the form of LCA (Life Cycle Assessment,) etc. of the above-mentioned material and/or information relative to the purchase and sale, transport, recycling, transformation into a semi-finished product, transformation into a finished product of the material of interest.

The computerized platform 1 allows a user to transcribe in the data archive 100 information relative to one or more phases of the life cycle of a certain batch of plastic material of interest, according to the methods illustrated above.

It should be noted that said data write operations are managed by the computerized platform 1 so that a user can create from scratch a traceability chain relative to the life cycle of the plastic material of interest (in this case the data write request R_{W1} does not comprise the above-mentioned further encrypted codes H relative to data already stored in the data archive 100) or so that a user can add an information block to an existing traceability chain (in this case the data write request R_{W1} comprises the above-mentioned further encrypted codes H relative to data already stored in the data archive 100).

In addition to the transcription of data, the computerized platform 1 allows a user to acquire detailed information relative to one or more phases of the life cycle of a certain batch of plastic material of interest, according to the methods illustrated above.

### Example #2

According to a further practical application of the invention, the computerized platform 1 is part of a computerized system designed to manage the waste cycle.

In this application of the computerized platform 1, the data exchanged (second, third and fourth data D₂, D₃, D₄) with the data archive 100 advantageously include information (data, metadata, connections, etc.) relative to a specific state of the waste of interest.

For example, the data exchanged with the data archive 100 can comprise: information relative to the producer and/or holder of the waste of interest; information relative to the specific characteristics of the waste such as LoW Code, LoW Name, Waste Description, Physical State, Hazard Classes, number of packages, type of packaging, chemical-physical characteristics, quantity, gross weight, tare weight; generic information relative to the carrier such as name, taxpayer ID no., address, contact, environmental authorizations, and specific information relative to the means used for transport such as driver data, data of the vehicle used, date and time of beginning of transport; data of the waste recipient such as name, taxpayer ID no., address, contact, environmental authorizations.

Furthermore, the data exchanged can include the digital signatures necessary in each phase indicated above.

The computerized platform 1 allows a user to transcribe in the data archive 100 information relative to one or more phases of the waste cycle of interest, according to the methods illustrated above.

Also in this case, a user can create from scratch a traceability chain relative to the waste cycle of interest (in this case the data write request R_{W1} does not comprise the above-mentioned further encrypted codes H relative to data already stored in the data archive 100) or so that a user can add an information block to an existing traceability chain (in this case the data write request R_{W1} comprises the above-mentioned further encrypted codes H relative to data already stored in the data archive 100).

In addition to data transcription, the computerized platform 1 allows a user to acquire detailed information relative to one or more phases of the waste cycle of interest, according to the methods illustrated above.

It should be noted that the computerized platform 1 can interface with the different systems and registers involved in the waste cycle, thanks to its particular structure that allows the user's application tools to be uncoupled from the data archive.

### Example #3

According to a further practical application of the invention, the computerized platform 1 is part of a computerized system designed to manage the so-called environmental product declarations.

Said documents, normally based on self-declarations certified if necessary by independent bodies, describe the environmental impact linked to the production of a specific quantity of product or of a service, for example energy and raw material consumption, waste production, atmospheric emissions and discharges into water bodies based on the provisions of the UNI EN ISO 14025 standard.

In this application of the computerized platform 1, the data exchanged (second, third and fourth data D₂, D₃, D₄) with the data archive 100 advantageously include information (data, metadata, connections, etc.) relative to the above-mentioned environmental declarations.

The computerized platform 1 allows a user to transcribe environmental declarations in the data archive 100, facilitating the provision thereof and verification by certification bodies.

### Example #4

According to a further practical application of the invention, the computerized platform 1 is part of a computerized system designed to manage the so-called declarations relative to recycled product percentages.

Said documents, normally based on self-declarations certified if necessary by independent bodies, describe the recycled raw material content in a product, referring to specific batches, and allow calculation of the environmental impact of the products in order to demonstrate compliance with the quality standards established by the current laws and obtain the tax relief scheduled for the use of recycled materials.

In this application of the computerized platform 1, the data exchanged (second, third and fourth data D₂, D₃, D₄) with the data archive 100 advantageously include information (data, metadata, connections, etc.) relative to the above-mentioned declarations.

The computerized platform 1 allows a user to transcribe in the data archive 100 the above-mentioned declarations, facilitating the provision thereof and any verification by certification bodies.

In general, the computerized platform 1 can be effectively used in any further application environment in which it is necessary to transcribe data to be conserved in a manner unchangeable and verifiable by third bodies. For example, the computerized platform 1 can be used in computerized systems for the conservation of documents or in computerized systems for the management of health data.

### Advantages of the invention

It has been seen in practice that the present invention offers numerous advantages with respect to the solutions of the known art.

In the computerized platform, according to the invention, the first computerized structure 2 is configured to provide services that can be easily used by the application tools available to the user, without any particular adaptations. It thus allows a generic user to exchange data with the data archive 100, by simply installing or using a suitable application interface.

The first computerized structure 2 is configured to validate the identity of the user and, as regards the write operation in the data archive 100, validate the format of the data D₂ sent by the user, so that said data are suitably arranged for the application environment for which the computerized platform is intended. Said authentication processes occur in a completely transparent manner for the user who only has to check the receipt of any error messages coming from the computerized structure 2.

The second computerized structure 3 of the computerized platform 1 is configured to interface with the data archive 100 so as to completely uncouple the user application tools from the data archive.

Said solution significantly increases the flexibility of the interaction process between user and data archive 100: users who use different application tools can interact with the data archive 100 in the same way, without being bound by the technology used for the creation of the data archive 100.

The computerized platform 1 has a high flexibility of use and ensures a high level of transparency for the data write or data acquisition operations requested by the user. For said purpose, in principle, according to some embodiments of the invention, the user could directly communicate with the computerized structures 2, 3 to check, without intermediaries, what transactions are to be performed by said computerized structures.

In a preferred embodiment, the computerized platform 1 allows a user to transcribe in the data archive 100 or to acquire from the data archive the above-mentioned information relative to one or more phases of the life cycle of a certain material or product.

Given the fact that the computerized platform 1 ensures maximum flexibility in the data write operations in the archive 100, a user can create a traceability chain relative to the life cycle of the material or product of interest or can add an information block to an existing traceability chain.

The computerized platform 1 further allows a user to access data already stored in the data archive 100 in a simple effective manner, if necessary collecting all the information connected to the requested data.

Thanks to its high operating flexibility, the computerized platform 1 is particularly suitable for use in application environments for which the value chain develops in a distributed manner. However, it can also be very effectively used in application environments for which the value chain develops in a linear manner.

The computerized platform 1 is easy for a user to use in practice. As illustrated above, in fact, the user can use the application tools at its discretion to interact with the data archive 100, without having to take into account the technology used to create the data archive.

The computerized platform 1 can be implemented at practical level with software development tools commonly used in the information technology field. It is therefore relatively simple to implement industrially, at relatively limited costs.

## Claims

1. Computerized platform (1) for interacting with a data archive (100) of the type capable of storing information in a manner unchangeable and verifiable by a user **characterized in that** it comprises a first computerized structure (2) and a second computerized structure capable of communicating with each other, said first computerized structure being adapted to communicate with one or more external computerized devices (200) to said computerized platform, said second computerized structure (3) being adapted to communicate with said data archive (100),
said first computerized structure (2) being configured to:
- acquire, from an external computerized device (200), a first data write request (R_{W1}) in said data archive (100) by a user, said first data write request (R_{W1}) including first data (D₁) indicative of the identity of said user and second data (D₂) to be written in said data archive (100);
- validate the identity of said user by checking whether said user is authorized to access to said data archive (100);
- validate said second data (D₂) by checking whether said second data have a predefined format according to the application environment of said computerized platform;
- sending a first call message (M_{CW}) to said second computerized structure (3), said first call message (M_{CW}) including said second data;
wherein said second computerized structure (3) is configured to:
- acquire said first call message (M_{CW}) from said first computerized structure (2);
- send a second data write request (R_{W2}) to said data archive (100), said second data write request having a predefined format required by said data archive (100), said second data write request including said second data (D₂);
- acquire, from said data archive (100), a first encrypted code (H₁) indicative of said second data (D₂) stored in said data archive;
- send said first encrypted code (H₁) to said first computerized structure (2);
wherein said first computerized structure is configured to forward said first encrypted code (H₁) to the external computerized device (200), which sent said first data write request (R_{W1}).

2. Computerized platform, according to claim 1, **characterized in that** said second computerized structure (3) is configured to:
- acquire a preliminary code (H₀) from said data archive (100), said preliminary code being indicative of the second data write request (R_{W2}) sent by said second computerized structure (3);
- send said preliminary code (H₀) to said data archive (100);
- acquire said first encrypted code (H₁) from said data archive (100).

3. Computerized platform, according to one of the preceding claims, **characterized in that** said second computerized structure (3) is configured to validate the identity of said first computerized structure (2), before sending said second data write request (R_{W2}) to said data archive (100).

4. Computerized platform, according to one of the preceding claims, **characterized in that** said first data write request (R_{W1}) includes one or more further encrypted codes (H) indicative of data already stored in said data archive (100), said first call message (M_{C1}) including said one or more further encrypted codes (H) together with said second data (D₂), said second data write request (R_{W2}) including said one or more further encrypted codes (H) together with said second data (D₂).

5. Computerized platform, according to one of the preceding claims, **characterized in that** said first computerized structure (2) is configured to:
- acquire, from an external computerized device (200), a first data acquisition request (R_{A1}) from said data archive (100) by a user, said first data acquisition request (R_{A1}) including first data (D₁) indicative of the identity of said user and at least a second encrypted code (H₂) indicative of third data (D₃) to be acquired from said data archive (100);
- validate the identity of said user by checking that said user is authorized for access to said data archive (100);
- sending a second call message (M_{CA}) to said second computerized structure (3), said second call message including said at least a second encrypted code (H₂);
wherein said second computerized structure (3) is configured to:
- acquire said second call message (M_{CA}) from said first computerized structure (2);
- send a second data acquisition request (R_{A2}) to said data archive (100), said second data acquisition request having a predefined format required by said data archive, said second data acquisition request including said at least a second encrypted code (H₂);
- acquire, from said data archive (100), the third data (D₃) identified by said at least a second encrypted code (H₂).

6. Computerized platform, according to claim 5, **characterized in that** said second computerized structure (3) is configured to acquire, from said data archive (100), further data (D₄) stored in said data archive (100) and identified by one or more encrypted codes connected to said at least a second encrypted code (H₂).

7. Computerized platform, according to one or more of claims from 5 to 6, **characterized in that** said second computerized structure (3) is configured to send to said first computerized structure (2) at least a portion of the data (D₃, D₄) acquired from said data archive (100), said first computerized structure being configured to forward the data (D₃, D₄) acquired by said second computerized structure (3) to the external computerized device (200), which sent said first data acquisition request (R_{A1}).

8. Computerized platform, according to claim 7, **characterized in that** said second computerized structure (3) is configured to:
- select a portion of the data (D₃, D₄) acquired from said data archive (100);
- send the selected data portion (D₃, D₄) to said first computerized structure (2).

9. Computerized platform, according to one of claims 5 to 8, **characterized in that** said second computerized structure (3) is configured to validate the identity of said first computerized structure (2), before sending said second data acquisition request (R_{A2}) to said data archive (100).

10. Computerized platform, according to one of the previous claims, **characterized in that** said data archive (100) is a data archive of the *"ledger"* type.

11. Computerized system **characterized in that** it comprises a data archive (100) adapted to store information in a manner immutable and verifiable by a client and a computerized platform (1), according to one of the preceding claims, to allow a user to interact with said data archive.
